# EUROPÄISCHE PATENTSCHRIFT

(11) **EP 0 475 143 B1**
(45) Veröffentlichungstag und Bekanntmachung des Hinweises auf die Patenterteilung: **01.03.1995**
(21) Anmeldenummer: 91114055.6
(22) Anmeldetag: 22.08.1991
(51) Int. Cl.: B29C 45/20

(54) **Heisskanal-Verteilersystem**
Hot runner distribution system
Système de distribution de canaux chauds

(30) Priorität: 10.09.1990 DE 4028660
(43) Veröffentlichungstag der Anmeldung: 18.03.1992
(73) Patentinhaber: INCOE INTERNATIONAL, INC., D-63322 Rödermark (DE)
(72) Erfinder: Gauler, Kurt, W-6106 Erzhausen (DE)
(74) Vertreter: Boecker, Joachim, Dr.-Ing.

(56) Entgegenhaltungen:
- AT-B- 367 684
- DE-A- 3 837 375

## Beschreibung

Die Erfindung betrifft ein Heißkanal-Verteilersystem zur Zufuhr von thermoplastischer Kunststoffschmelze zu Spritzgießwerkzeugen, mit einem Verteilerkanäle aufweisenden beheizbaren Verteilerblock, der im Abstand über einer Düsenplatte angeordnet ist, und mit mehreren, jeweils in einer Aufnahmebohrung der Düsenplatte angeordneten Angußbuchsen, die jeweils mit einer Heizmanschette versehen und mit einer Austrittsöffnung eines Verteilerkanals dicht verbunden sind, wobei jede Angußbuchse an ihrem einen Ende mit einem Gewindeansatz in eine Gewindebohrung an der zugeordneten Austrittsöffnung des Verteilerkanals im Verteilerblock dichtend eingeschraubt ist.

Derartige Heißkanal-Verteilersysteme dienen dazu, die durch Erwärmung plastifizierte Kunststoffschmelze zum Spritzgießwerkzeug zu leiten. Der Verteilerblock verteilt die Kunststoffschmelze über die im Verteilerblock ausgebildeten Verteilerkanäle zu den einzelnen Angußbuchsen. Während bei kleineren Spritzgießwerkzeugen eine einzige Angießbuchse ausreicht, sind für größere Spritzgießwerkzeuge, die zur Herstellung größerer Spritzgußteile oder mehrerer Spritzgußteile dienen, mehrere Angußbuchsen erforderlich, um dem Spritzgießwerkzeug die Kunststoffschmelze an mehreren Stellen zuzuführen.

Üblicherweise sind die Angußbuchsen in die Aufnahmebohrungen der Düsenplatte eingesetzt und berühren die Plattenunterfläche des Verteilerblocks mit ihrer oberen Stirnfläche. Um einen dichten Anschluß zwischen der Angußbuchse und der Unterseite des Verteilerblocks zu erreichen, wird der Verteilerblock über eine darüber angeordnete Kopfplatte gegen die Stirnflächen der Angußbuchsen gedrückt. Außerdem ist im Bereich des Übergangs aus der Austrittsöffnung des Verteilerblocks in die Bohrung der Angußbuchse eine Dichtung eingelegt, die in einem sich nach oben erweiternden Endabschnitt der Bohrung der Angußbuchse liegt.

Da die Angußbuchsen in den Aufnahmebohrungen der Düsenplatte zentriert sind und da am Verteilerblock Wärmedehnungen infolge von Temperaturänderungen auftreten, kommt es im Dichtungsbereich zwischen der oberen Stirnfläche der Angußbuchsen und der glatten Unterfläche des Verteilerblocks zu Verschiebungen. Durch solche Verschiebungen und insbesondere durch die die Dichtung aufnehmende Erweiterung entstehen im Bereich des Übergangs vom Verteilerblock in die Angußbuchsen Hinterschneidungen bzw. Stufen, die den glatten Schmelzefluß stören können. Dies wirkt sich bei der Verarbeitung empfindlicher Kunststoffe nachteilig aus. In den durch die Hinterschneidungen bzw. Stufen gebildeten toten Ecken können Kunststoffreste zurückbleiben, die dann infolge der längeren Verweilzeit thermisch geschädigt werden können.

Auch bei einem Farbwechsel der Kunststoffschmelzen stören solche verbleibenden Kunststoffreste, weil sie Farbverunreinigungen der nachfolgend eingespritzten Kunststoffschmelze verursachen. Deshalb ist ein Farbwechsel hierbei zeitaufwendig.

Insgesamt ist zu berücksichtigen, daß jede Unterbrechung des glatten Kanalverlaufs für die Kunststoffschmelze Störungen im Strömungsverlauf der Kunststoffschmelze verursacht, die sich insbesondere bei empfindlichen Kunststoffen nachteilig auf die Verarbeitungsqualität auswirken.

Die bisher übliche Trennung von Verteilerblock und Angußbuchsen hat außerdem den Nachteil, daß die elektrische Verdrahtung der Heizeinrichtung des Verteilerblocks und der Heizmanschetten der Angußbuchsen erst beim Zusammenbau mit dem Spritzgießwerkzeug erfolgen kann. Die elektrische Installation muß somit im Werkzeugbau durchgeführt werden; die auf den Werkzeugbau spezialisierten Fachkräfte sind aber üblicherweise nicht als Elektrofachkräfte ausgebildet. Hinzu kommt noch, daß der Betrieb, der den Verteilerblock und die Angußbuchsen fertigt und liefert, keine Gewähr für deren ordnungsgemäßen elektrischen Anschluß übernehmen kann, da die elektrische Installation erst in dem Werkzeugbau-Betrieb fertiggestellt wird.

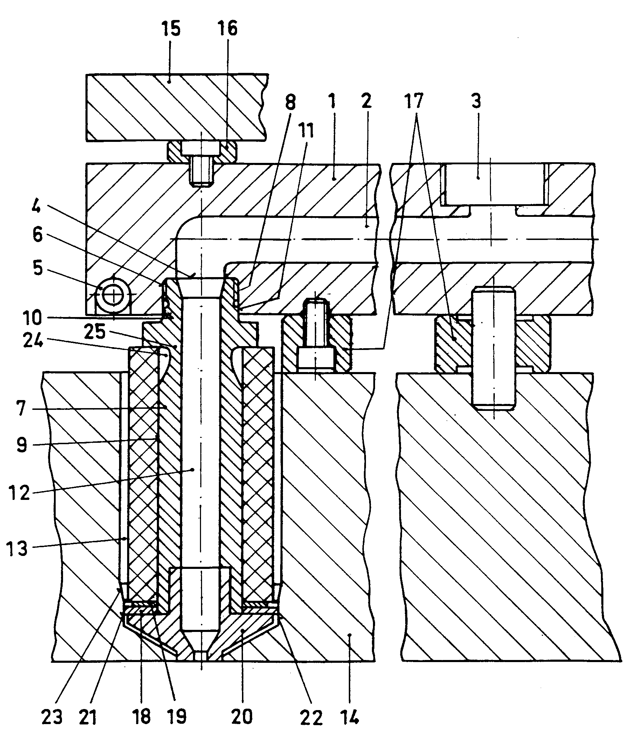

Aus GB-A-1 484 753 (Figur 6) ist es bereits bekannt, die Angußbuchse mittels einer Schraubverbindung mit dem Verteilerblock zu verbinden.

Durch die feste Schraubverbindung zwischen jeder Angußbuchse und dem Verteilerblock wird in diesem Bereich ein glatter Kanalübergang ohne Unterbrechungen oder Ansätze der Kanalwand für die Strömung der Kunststoffschmelze erreicht, da keine Relativverschiebungen zwischen dem Verteilerblock und den Angußbuchsen auftreten. Das Heißkanal-Verteilersystem kann vor der Verbindung mit der Düsenplatte des Spritzgießwerkzeugs als bauliche und elektrische Einheit fertiggestellt werden.

Wenn ein Verteilerblock mit mehreren eingeschraubten Angußbuchsen in die Düsenplatte eingesetzt ist, können infolge unterschiedlicher Wärmedehnungen seitliche Kräfte auf die Angußbuchsen ausgeübt werden, die zu einer Biegung der Längsachse der Angußbuchse führen können. Durch diese Biegung wird die gleichmäßige Anlage der Heizmanschette an der äußeren Zylinderfläche der Angußbuchse beeinträchtigt, was zu einem verschlechterten und ungleichmäßigen Wärmetransport von der Heizmanschette zu der Kunststoffschmelze führt.

Aus der DE-A-3 837 375 ist eine Formpresse bekannt, bei der in üblicher Weise die Gießmasse durch eine Spritzdüse, die sich in der Einspritzöffnung der Gießform befindet, in die Gießform gepresst wird. Die Spritzdüse ist dabei mit einer flexiblen Verschlußklappe versehen, die so angebracht ist, daß sie den Fluß der Gießmasse durch die Einspritzöffnung begrenzt. Beim Einspritzen wird durch den Überdruck der Gießmasse die flexible Verschlußklappe aufgedrückt, so daß die Gießmasse in die Form gelangt. Sobald der Druck auf der Zuführseite der Gießmasse verschwindet oder kleiner als auf der Gießformseite wird, verschließt die Verschlußklappe die Spritzdüse, so daß keine Gießmasse aus der Form zurückströmen kann.

Die AT-B-367 684 beschreibt ein Heißkanal-Spritzgießwerkzeug, welches mit einer großen Zahl von Einspritzdüsen mit Nadelventilen versehen ist. Diese Nadelventile werden beim Einspritzen von Kunststoff in die Spritzform entgegen der Wirkung einer Feder durch Verschieben in axialer Richtung im Ventilgehäuse geöffnet. Um zu vermeiden, daß bei einer Reparatur oder Wartung eines einzelnen Nadelventils eine Vielzahl von Ventilen gleichzeitig ausgebaut werden muß, ist jedes Ventil, mit seinem Ventilgehäuse, seiner Nadel und der Feder als eine kompakte Baueinheit ausgebildet, die individuell von der Rückseite, also entgegen der Strömungsrichtung der Spritzmasse, ausgebaut werden kann.

Der Erfindung liegt die Aufgabe zugrunde, ein Heißkanal-Verteilersystem der eingangs genannten Art zu entwickeln, bei welchem eine Verbiegung der Angußbuchsen im eingebauten Zustand in dem Heißkanal-Verteilersystem vermieden wird.

Zur Lösung dieser Aufgabe wird ein Heißkanal-Verteilersystem gemäß dem Oberbegriff des Anspruches 1 vorgeschlagen, welches erfindungsgemäß die im kennzeichnenden Teil des Anspruches 1 genannten Merkmale hat.

Vorteilhafte Ausgestaltungen der Erfindung sind in den weiteren Ansprüchen genannt.

Um die unvermeidlichen Wärmedehnungen des Verteilerblocks auffangen zu können, ist jede Angußbuchse nur im Bereich ihres unteren düsenseitigen Endes in der Düsenplatte zentriert und weist an ihrem oberen, dem Verteilerblock zugekehrten Ende eine Sollbiegestelle auf, die vorzugsweise durch eine äußere Umfangsnut in der Angußbuchse gebildet wird. Dadurch kann sich die Angußbuchse bei Längenänderungen des Verteilerblocks infolge von Temperaturänderungen an der Sollbiegestelle biegen, während das entgegengesetzte, untere Ende der Angußbuchse in der Düsenplatte festgelegt ist.

Die durch die Sollbiegestelle erreichte, begrenzte Beweglichkeit der Angußbuchsen vereinfacht auch die Herstellung und die Montage; unvermeidbare Fertigungstoleranzen der Lage der Angußbuchsen und der Aufnahmebohrungen werden infolge dieser Bewegbarkeit ausgeglichen.

Deshalb kann die aus dem Verteilerblock und den Angußbuchsen bestehende Baueinheit einschließlich der zugehörigen elektrischen Installation vorgefertigt werden. Dabei ist eine Überprüfung und Endabnahme der elektrischen Installation noch im Herstellerbetrieb möglich, bevor diese Baueinheit an den Werkzeugbau-Betrieb geliefert wird. Dort wird die aus dem Verteilerblock und den eingeschraubten Angußbuchsen einschließlich elektrischer Installation bestehende Baueinheit auf die Düsenplatte des Spritzgießwerkzeugs aufgesetzt, wobei die Angußbuchsen in die zugehörigen Aufnahmebohrungen eingeführt werden. Da sich die Aufnahmebohrung zum Zentrierabschnitt hin verjüngt, erfolgt eine selbsttätige Zentrierung aller Angußbuchsen beim Aufsetzen der Baueinheit ohne daß hierfür gesonderte Zentriermaßnahmen erforderlich wären. Hierbei entfällt die Notwendigkeit, beim Zusammenbau für eine wirksame Abdichtung zwischen den Angußbuchsen und dem Verteilerblock zu sorgen, weil dieser dichte Anschluß bereits durch das Einschrauben der Angußbuchsen in den Verteilerblock gewährleistet ist. Störungen, die durch austretende Kunststoffschmelze im Bereich zwischen einer Angußbuchse und dem Verteilerblock auftreten können, sind dabei ausgeschlossen, ebenso Störungen durch fehlerhafte elektrische Installation.

Im Bereich des Anschlusses der Angußbuchsen an den Verteilerblock kann kein Verschleiß an Dichtflächen infolge von Relativbewegung auftreten; es ist auch nicht erforderlich, einen Dichtring auszuwechseln. Produktionsausfälle infolge von Störungen im Bereich des Anschlusses zwischen Angußbuchse und Verteilerblock sind damit ausgeschlossen; kostspielige und zeitaufwendige Reparaturarbeiten in diesem Bereich fallen nicht an.

Der glatte Kanalverlauf für die Strömung der Kunststoffschmelze im Bereich des Anschlusses der Angußbuchsen an den Verteilerblock ermöglicht einen unbehinderten Schmelzefluß, so daß auch sehr empfindliche Kunststoffe optimal verarbeitet werden könne. Ein Farbwechsel kann schnell durchgeführt werden, weil keine Kunststoffreste zurückbleiben können.

Gemäß einer vorteilhaften Ausgestaltung des Erfindungsgedankens ist vorgesehen, daß sich an die Gewindebohrung an der Austrittsöffnung des Verteilerkanals in Richtung zur Angußbuchse hin ein zylindrischer Zentrierabschnitt anschließt, in den eine Zentrier-Zylinderfläche an der Angußbuchse paßt. Dadurch wird unabhängig von der Führung im Gewindebereich eine genaue Zentrierung zwischen der Angußbuchse und dem Verteilerblock erreicht, wodurch ein völlig glatter Kanalverlauf an der Übergangsstelle gewährleistet ist.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist.

Die Zeichnung zeigt einen senkrechten Teilschnitt durch das Heißkanal-Verteilersystem für ein Spritzgußwerkzeug.

Ein Verteilerblock 1 enthält Verteilerkanäle 2, die die erhitzte, plastifizierte Kunststoffschmelze, die beispielsweise von einem beheizten Extruder (nicht dargestellt) geliefert wird, von einem zentralen Anschluß 3 zu mehreren Austrittsöffnungen 4 leitet. Der Verteilerblock 1 wird durch einen Rohrheizkörper 5 elektrisch beheizt.

An jeder Austrittsöffnung 4 (wobei in der Zeichnung der Einfachheit halber nur eine einfache Austrittsöffnung 4 gezeigt ist) ist eine Gewindebohrung 6 vorgesehen, in die eine Angußbuchse 7 mit einem Gewindeansatz 8 an ihrem oberen Ende eingeschraubt ist. Jede Angußbuchse 7, die im wesentlichen rohrförmig ausgeführt ist, ist von einer elektrischen Heizmanschette 9 umgeben.

An die Gewindebohrung 6 schließt sich in Richtung zur Angußbuchse 7 hin ein zylindrischer Zentrierabschnitt 10 an, in den eine Zentrier-Zylinderfläche 11 an der Angußbuchse 7 paßt. Die Austrittsöffnung 4 des Verteilerkanals 2 geht glatt und ohne jeglichen Absatz oder Stufe in eine zentrale Bohrung 12 der Angußbuchse 7 über.

Die Angußbuchse 7 ist in einer Aufnahmebohrung 13 einer im Abstand des Verteilerblocks 1 angeordneten Düsenplatte 14 eingesetzt, die einen Teil des zu versorgenden (nicht dargestellten) Spritzgießwerkzeugs bildet. Eine über dem Verteilerblock angeordnete Kopfplatte 15 ist mit der Düsenplatte 14 über (Zugschrauben) in der Weise verspannt, daß sie über Zwischenlagen 16 den Verteilerblock 1 gegen die Düsenplatte 14 verspannt, wobei ebenfalls Zwischenstücke 17 eingelegt sind, so daß ein Abstand zwischen dem Verteilerblock 1 und der Düsenplatte 14 bestehen bleibt.

Die Angußbuchse 7, die mit ihrem oberen Ende dicht, unverschiebbar und biegesteif mit dem Verteilerblock 1 verbunden ist, ist mit ihrem unteren Ende gegenüber der Düsenplatte 14 in der Aufnahmebohrung 13 zentriert. Hierzu trägt die Angußbuchse 7 an ihrem unteren Ende eine kreisringförmige Führungsscheibe 18, die unter Zwischenlage einer Isolierscheibe 19 zwischen der Heizmanschette 9 und einer eingesetzten Düsenkappe 20 der Angußbuchse 7 gehalten wird. Die Führungsscheibe 18 bildet mit ihrer Umfangsfläche eine Umfangs-Zentrierfläche 21, die in einen zylindrischen Zentrierabschnitt 22 der Aufnahmebohrung 13 eingepaßt ist. Wie man aus der Zeichnung erkennt, verjüngt sich die Aufnahmebohrung 13, die gegenüber der Außenfläche der Heizmanschette 9 einen Spalt bildet, über einen konischen Einführabschnitt 23 zum Zentrierabschnitt 22.

Nahe dem oberen Ende der Angußbuchse 7 weist deren rohrförmiger, zylindrischer Schaft eine äußere Umfangsnut 24 auf. Dadurch entsteht ein Abschnitt geringerer Wanddicke, der eine Sollbiegestelle 25 nahe dem oberen Ende der Angußbuchse 7 bildet. Die Angaben "oben" und "unten" beziehen sich in diesem Zusammenhang auf die Anordnung in der Zeichnung; es versteht sich, daß das dargestellte Heißkanal-Verteilersystem auch in anderer Anordnung, beispielsweise mit nach oben ragenden Angußbuchsen 7, eingebaut werden kann.

Durch die Sollbiegestelle 25 wird eine gewisse relative Beweglichkeit des freien Endes der Angußbuchse 7 gegenüber dem Verteilerblock 1 erreicht. Dies führt dazu, daß sich bei der Montage des Heißkanal-Verteilersystems das freie Ende der Angußbuchse 7 nach dem Zentrierabschnitt 22 in der Düsenplatte 14 ausrichten kann, auch wenn infolge von Fertigungstoleranzen eine horizontale Lageabweichung gegenüber der Austrittsöffnung 4 besteht. Im Betrieb führt diese Beweglichkeit der Angußbuchsen 7 dazu, daß Wärmedehnungen des beheizten Verteilerblocks 1 quer zur Achse der Angußbuchse 7 (d.h. in horizontaler Richtung in der Zeichnung) zugelassen werden können, ohne daß eine Verschiebung zwischen dem oberen Ende der Angußbuchse 7 und der Unterseite des Verteilerblocks 1 auftreten würde.

Die (nicht dargestellten) elektrischen Anschlüsse der Heizmanschetten 9 aller Anschlußbuchsen 7 des dargestellten Heißkanal-Verteilersystems sind zu einem gemeinsamen elektrischen Anschluß zusammengefaßt, der wiederum mit dem elektrischen Anschluß des Rohrheizkörpers 5 des Verteilerblocks 1 - vorzugsweise über in einem biegsamen Rohr verlaufende Leitungen - zu einem gemeinsamen Steckanschluß zusammengefaßt sind.

Bei der Herstellung wird der Verteilerblock 1 mit den eingeschraubten Angußbuchsen 7 und der zugehörigen elektrischen Installation fertiggestellt und hinsichtlich der elektrischen Funktionsfähigkeit geprüft. Erst dann wird diese Baueinheit an den Werkzeugbau-Betrieb geliefert. Dort ist es nur noch erforderlich, diese Baueinheit so an das Spritzgießwerkzeug anzuschließen, daß die einzelnen Angußbuchsen 7 in die Aufnahmebohrungen 13 der Düsenplatte 4 eingeführt werden. Elektrische Verdrahtungs- oder Anschlußarbeiten sind nicht mehr erforderlich.

Da der beheizte Verteilerblock 1 nur an wenigen Stellen mit benachbarten Bauteilen in Berührung steht, ist eine wirksame Wärmeisolation in einfacher Weise möglich; Wärmebrücken, die zu einer Aufheizung benachbarter Bauteile, insbesondere des Spritzgießwerkzeugs, führen würden, werden weitgehend vermieden. Für die den Verteilerblock 1 berührenden Zwischenstücke 16 bzw. 17 können wärmeisolierende Materialien verwendet werden.

Zweckmäßigerweise besteht auch die Führungsscheibe 18 aus wärmeisolierendem Material, um einen Wärmeübergang zwischen der Angußbuchse 7 und der Düsenplatte 14 weitgehend zu vermeiden.

Die Zentrierung der Angußbuchsen 7 über die Führungsscheiben 18 in den Zentrierabschnitten 22 bewirkt, daß bei Demontage eine Beschädigung der Stirnfläche der Düsenkappe 20 verhindert wird.

## Patentansprüche

1. Heißkanal-Verteilersystem zur Zufuhr von thermoplastischer Kunststoffschmelze zu Spritzgießwerkzeugen mit einem Verteilerkanäle (2) aufweisenden, beheizbaren Verteilerblock (1), der im Abstand über einer Düsenplatte (14) angeordnet ist, und mit mehreren jeweils in einer Aufnahmebohrung (13) der Düsenplatte (14) angeordneten Angußbuchsen (7), die jeweils mit einer Heizmanschette (9) versehen und mit einer Austrittsöffnung (4) eines Verteilerkanals (2) dicht verbunden sind, wobei jede Angußbuchse (7) an ihrem einen Ende mit einem Gewindeansatz (8) in eine Gewindebohrung (6) an der zugeordneten Austrittsöffnung (4) des Verteilerkanals (2) im Verteilerblock (1) dichtend eingeschraubt ist, **dadurch gekennzeichnet**, daß die Angußbuchse (7) nahe dem genannten einen Ende eine Sollbiegestelle (25) aufweist und daß die Angußbuchse (7) im Bereich ihres anderen Endes in der Düsenplatte zentriert ist.

2. Heißkanal-Verteilersystem nach Anspruch 1, **dadurch gekennzeichnet**, daß die Angußbuchse (7) an ihrem anderen Ende mit einer Umfangs-Zentrierfläche (21) versehen ist und daß sich die Aufnahmebohrung (13) der Düsenplatte (14) zu einem die Umfangs-Zentrierfläche (21) passend aufnehmenden Zentrierabschnitt (22) verjüngt.

3. Heißkanal-Verteilersystem nach einem der Ansprüche 1 oder 2, **dadurch gekennzeichnet**, daß die Sollbiegestelle (25) durch eine äußere Umfangsnut (24) an der Angußbuchse (7) gebildet wird.

4. Heißkanal-Verteilersystem nach einem der vorhergehenden Ansprüche, **dadurch gekennzeichnet**, daß sich an der Gewindebohrung (6) in Richtung zur Angußbuchse (7) hin ein zylindrischer Zentrierabschnitt (10) anschließt, in den eine Zentrier-Zylinderfläche (11) an der Angußbuchse (7) paßt.

5. Heißkanal-Verteilersystem nach einem der Ansprüche 2 bis 4, **dadurch gekennzeichnet**, daß die Umfangs-Zentrierfläche (21) an der Angußbuchse (7) durch die Umfangsfläche einer Führungsscheibe (18) gebildet wird, die von einer eingesetzten Düsenkappe (20) der Angußbuchse (7) gehalten wird.

## Claims

1. Hot-channel distributor system for supplying molten thermo-plastic material to injection molding tools comprising a heatable distributor block (1) with distributor channels (2), said distributor block being arranged at a distance above a nozzle plate (14), and comprising a plurality of sprue bushings (7) each of which is arranged in a reception opening (13) of said nozzle plate (14), is provided with a heating collar (9) and is sealingly connected to an outlet opening (4) of a distributor channel (2), whereby each sprue bushing (7) is sealingly screwed into a threaded opening (6) at the corresponding outlet opening (4) of the distributor channel (2) in the distributor block (1) with the help of a threaded extension (8) on one of its ends, **characterized** in that the sprue bushing (7), in the vicinity of said one end, is provided with a predetermined bending point (25) and that the sprue bushing (7) is centered in the area of its other end in said nozzle plate.

2. Hot-channel distributor system according to claim 1, **characterized** in that the sprue bushing (7) is provided at its other end with a circumferential centering surface (21), and that the reception opening (13) of the nozzle plate (14) tapers down to a circumferential centering section (22) adapted to receive said circumferential centering surface (21).

3. Hot-channel distributor system according to any of claims 1 or 2, **characterized** in that said predetermined bending point (25) is formed by an outer circumferential slot (24) around the sprue bushing (7).

4. Hot-channel distributor system according to any of the preceding claims, **characterized** in that said threaded opening (6) is followed, in the direction towards said sprue bushing (7) by a cylindrical centering section (10) which is adapted to a centering cylindrical surface (11) provided on said sprue bushing (7).

5. Hot-channel distributor system according to any of claims 2 - 4, **characterized** in that said circumferential centering surface (21) of the sprue bushing is formed by the peripheral surface of a guiding washer (18) which is supported by an inserted nozzle hood of the sprue bushing.

## Revendications

1. Système répartiteur à canaux chauffants, destiné à amener de la matière plastique thermoplastique en fusion à des moules de moulage par injection, comprenant un bloc répartiteur (1) qui comporte des canaux (2) répartiteurs, qui peut être chauffé, et qui est disposé à distance au-dessus d'une plaque de buses (14), et plusieurs douilles de carotte (7) disposées chacune dans un trou (13) de réception ménagé dans la plaque de buses (14), munie chacune d'un manchon (9) de chauffage et communiquant de manière étanche avec un orifice (4) de sortie d'un canal (2) répartiteur, chaque douille de carotte (7) étant vissée de manière étanche dans un taraudage (6) de l'orifice (4) de sortie associé du canal (2) répartiteur du bloc répartiteur (1), caractérisé en ce que les douilles de carotte (7) comportent à proximité de ladite une extrémité un point (25) destiné à se plier et en ce que la douille de carotte (7) est centrée dans la région de son autre extrémité dans la plaque de buses.

2. Système répartiteur à canaux chauffants suivant la revendication 1, caractérisé en ce que la douille de carotte (7) est munie à son autre extrémité d'une surface de centrage (21) périphérique et en ce que le trou (13) de réception ménagé dans la plaque de buse (14) se rétrécit vers une partie de centrage (22) recevant de manière ajustée la surface de centrage (21) périphérique.

3. Système répartiteur à canaux chauffants suivant l'une des revendications 1 ou 2, caractérisé en ce que le point (25) destiné à se plier est formé par une gorge (24) extérieure périphérique de la douille de carotte (7).

4. Système répartiteur à canaux chauffants suivant l'une des revendications précédentes, caractérisé en ce qu'au taraudage (6) se raccorde dans la direction allant vers la douille de carotte (7) une partie de centrage (10) cylindrique, dans laquelle une surface cylindrique (11) de centrage s'adapte à la douille de carotte (7).

5. Système répartiteur à canaux chauffants suivant l'une des revendications 2 à 4, caractérisé en ce que la surface de centrage (21) périphérique est formée sur la douille de carotte (7) par la surface périphérique d'un disque (18) de guidage, qui est maintenu par un chapeau de buse (20) inséré de la douille de carotte (7).
